# EUROPÄISCHE PATENTSCHRIFT

(11) **EP 3 101 370 B1**
(45) Veröffentlichungstag und Bekanntmachung des Hinweises auf die Patenterteilung: **08.09.2021**
(21) Anmeldenummer: 16163569.3
(22) Anmeldetag: 01.04.2016
(51) Int. Cl.: F25B 21/00, B60H 1/22, B60H 1/00

(54) **TEMPERIERGERÄT, INSBESONDERE FAHRZEUGTEMPERIERGERÄT**
TEMPERATURE CONTROL DEVICE, IN PARTICULAR VEHICLE TEMPERATURE CONTROL DEVICE
THERMOREGULATEUR EN PARTICULIER THERMOREGULATEUR DE VEHICULE AUTOMOBILE

(30) Priorität: 09.04.2015 DE 102015105345
(43) Veröffentlichungstag der Anmeldung: 07.12.2016
(73) Patentinhaber: Eberspächer Climate Control Systems GmbH, 73730 Esslingen (DE)
(72) Erfinder: Humburg, Michael, 73035 Göppingen (DE)
(74) Vertreter: Ruttensperger Lachnit Trossin Gomoll

(56) Entgegenhaltungen:
- EP-A1- 1 736 717
- JP-A- 2013 213 653
- US-A1- 2003 106 323
- None

## Beschreibung

Die vorliegende Erfindung betrifft ein Temperiergerät, insbesondere ein Fahrzeugtemperiergerät, gemäß dem Oberbegriff des Anspruchs 1, welches unter Ausnutzung des magnetokalorischen Effektes zum Kühlen oder Erwärmen beispielsweise eines Fahrzeuginnenraums eingesetzt werden kann.

Bei Wärmepumpen, die unter Ausnutzung des magnetokalorischen Effektes arbeiten, wird magnetokalorisches Material alternierend in ein Magnetfeld hinein und aus dem Magnetfeld heraus bewegt. Beim Bewegen in das Magnetfeld hinein findet eine Spinausrichtung der Elektronen des magnetokalorischen Materials unter Einfluss des Magnetfeldes statt. Diese Spinausrichtung bzw. Ausrichtung der magnetischen Momente in dem Magnetfeld hat zur Folge, dass die magnetische Entropie sinkt. Da die Gesamtentropie des Systems nicht abnehmen kann, erhöht sich eine in einem Temperaturanstieg sich manifestierende thermische Entropie. Wird das magnetokalorische Material aus dem Magnetfeld heraus bewegt, findet der umgekehrte Prozess statt. Die Temperatur eines aus einem Magnetfeld herausbewegten magnetokalorischen Materials nimmt ab.

Da im Vergleich zu in konventionellen Kühlgeräten bzw. Wärmepumpen genutzten thermodynamischen Prozessen unter Ausnutzung des magnetokalorischen Effektes nur geringere Temperaturunterschiede hervorgerufen werden können, ist es zur Bereitstellung einer diese Temperaturunterschiede übersteigenden Temperaturänderung des magnetokalorischen Materials bzw. eines von diesem Wärme aufnehmenden Fluids erforderlich, mehrstufige Prozesse durchzuführen, in welchen durch Hintereinanderschaltung mehrerer den magnetokalorischen Effekt nutzender Systeme eine sukzessive Temperaturänderung erreicht wird.

Ein Temperiergerät gemäß dem Oberbegriff des Anspruchs 1 ist aus der EP 1 736 717 A bekannt. Bei diesem Temperiergerät ist ein einen Temperierkörper um eine Drehachse drehbar aufnehmendes Temperierkörperaufnahmegehäuse in zwei sich jeweils näherungsweise über einen Winkelbereich von 180° erstreckende Bereiche unterteilt. Einem dieser beiden Bereiche ist eine Magnetanordnung zugeordnet, um in diesem Bereich und somit auch in dem in diesem Bereich positionierten Abschnitt des aus magnetokalorischem Material aufgebauten Temperierkörpers ein Magnetfeld zu generieren, während im anderen Bereich kein Magnetfeld erzeugt ist. Diese beiden Bereiche bilden einen einen Magnetfeld-Erwärmungsbereich, nämlich denjenigen Bereich, der von einem Magnetfeld durchsetzt ist, und einen Kühlbereich, nämlich denjenigen Bereich, der nicht von einem Magnetfeld durchsetzt ist, aufweisenden Temperiersektor.

Es ist die Aufgabe der vorliegenden Erfindung, ein unter Ausnutzung des magnetokalorischen Effekts arbeitendes Temperiergerät, insbesondere Fahrzeugtemperiergerät, bereitzustellen, welches bei einfachem und kompaktem Aufbau zur Erreichung größerer Temperaturänderungen betreibbar ist.

Erfindungsgemäß wird diese Aufgabe gelöst durch ein Temperiergerät, insbesondere Fahrzeugtemperiergerät, gemäß Anspruch 1. Dieses umfasst einen von Wärmeträgermedium durchströmbaren oder/und umströmbaren, mit magnetokalorischem Material aufgebauten, vorzugsweise ringartigen Temperierkörper, ein den Temperierkörper um eine Drehachse drehbar aufnehmendes Temperierkörperaufnahmegehäuse mit einem Temperierkörperaufnahmeraum, eine Mehrzahl von in Umfangsrichtung aufeinanderfolgenden Temperiersektoren jeweils mit einem Kühlbereich und einem in Umfangsrichtung neben dem Kühlbereich angeordneten Magnetfeld-Erwärmungsbereich, so dass sich eine alternierende Umfangsabfolge von Kühlbereichen und Magnetfeld-Erwärmungsbereichen ergibt, bei wenigstens zwei benachbarten Temperiersektoren eine Wärmeträgermediumzirkulation von dem Magnetfeld-Erwärmungsbereich von einem dieser Temperiersektoren zu dem Kühlbereich des anderen dieser Temperiersektoren und von dem Kühlbereich des anderen dieser Temperiersektoren zu dem Magnetfeld-Erwärmungsbereich des einen dieser Temperiersektoren, wobei bei wenigstens einem Temperiersektor der Kühlbereich von einem Wärmeeintragfluid zum Eintragen von Wärme in diesem Temperiersektor durchströmbar ist oder/und wobei bei wenigstens einem Temperiersektor der Magnetfeld-Erwärmungsbereich von einem Wärmeabfuhrfluid zur Abfuhr von Wärme aus diesem Temperiersektor durchströmbar ist.

Das erfindungsgemäße Temperiergerät kann unter Ausnutzung des magnetokalorischen Effekts nach Art einer Wärmepumpe arbeiten, um durch thermische Wechselwirkung einerseits das Wärmeeintragfluid zu kühlen, andererseits das Wärmeabfuhrfluid zu erwärmen. Es wird also Wärme vom Wärmeeintragfluid auf das Wärmeabfuhrfluid übertragen. Je nachdem, ob das erfindungsgemäße Temperiergerät als Heizgerät oder als Kühlgerät genutzt werden soll, kann in einer zugeordneten Wärmetauscheranordnung das Wärmeeintragfluid genutzt werden, um ein anderes Medium, beispielsweise die in einem Fahrzeuginnenraum einzuleitende Luft, zu kühlen, oder kann das Wärmeabfuhrfluid genutzt werden, beispielsweise um die in einen Fahrzeuginnenraum einzuleitende Luft zu erwärmen. Da die Effizienz des erfindungsgemäßen Temperiergeräts mit zunehmender Temperatur insbesondere des Wärmeeintragfluids zunimmt, ist der Einsatz als Kühlgerät, also beispielsweise als Fahrzeugklimatisiergerät, besonders vorteilhaft.

Um die zur Erzeugung des magnetokalorischen Effektes erforderliche magnetische Wechselwirkung bereitzustellen, ist in Zuordnung zu jedem Magnetfeld-Erwärmungsbereich eine Magnetanordnung zur Erzeugung eines den Magnetfeld-Erwärmungsbereich durchsetzenden Magnetfeldes vorgesehen.

Dabei kann für eine effiziente magnetische Wechselwirkung einerseits und eine effiziente Abfuhr bzw. Zufuhr von Wärme andererseits vorgesehen sein, dass bei wenigstens einem Temperiersektor die Magnetanordnung zur Erzeugung eines im Wesentlichen radial orientierten Magnetfeldes angeordnet ist oder/und die Wärmeträgermediumzirkulation zur Erzeugung einer den Magnetfeld-Erwärmungsbereich und den Kühlbereich im Wesentlichen axial durchströmenden Wärmeträgermediumströmung ausgebildet ist.

Alternativ bzw. zusätzlich kann vorgesehen sein, dass bei wenigstens einem Temperiersektor die Magnetanordnung zur Erzeugung eines im Wesentlichen axial orientierten Magnetfeldes angeordnet ist oder/und die Wärmeträgermediumzirkulation zur Erzeugung einer den Magnetfeld-Erwärmungsbereich und den Kühlbereich im Wesentlichen radial durchströmenden Wärmeträgermediumströmung ausgebildet ist.

Um den Wärmeaustausch zwischen einem Kühlbereich und einem benachbarten Magnetfeld-Erwärmungsbereich in einfacher Weise bereitstellen zu können, wird vorgeschlagen, dass zur Bereitstellung einer Wärmeträgermediumzirkulation bei wenigstens zwei benachbarten Temperiersektoren wenigstens eine von dem Magnetfeld-Erwärmungsbereich zu dem Kühlbereich führende erste Zirkulationsleitung, wenigstens eine von dem Kühlbereich zu dem Magnetfeld-Erwärmungsbereich führende zweite Zirkulationsleitung und eine Zirkulationspumpe vorgesehen sind.

Zur Bereitstellung des Temperierkörperaufnahmeraums in dem Temperierkörperaufnahmegehäuse wird vorgeschlagen, dass das Temperierkörperaufnahmegehäuse eine den Temperierkörperaufnahmeraum an einer ersten Radialseite in einer ersten Radialrichtung, vorzugsweise nach radial innen, begrenzende erste Gehäuseumfangswandung und eine den Temperierkörperaufnahmeraum an einer zweiten Radialseite in einer zweiten Radialrichtung, vorzugsweise nach radial außen, begrenzende zweite Gehäuseumfangswandung umfasst. Ferner kann vorgesehen sein, dass das Temperierkörperaufnahmegehäuse eine den Temperierkörperaufnahmeraum an einer ersten Axialseite in einer ersten Axialrichtung begrenzende erste Gehäusestirnwandung und eine den Temperierkörperaufnahmeraum an einer zweiten Axialseite in einer der ersten Axialrichtung entgegengesetzten zweiten Axialrichtung begrenzende zweite Gehäusestirnwandung umfasst. Auf diese Art und Weise wird ein Aufbau geschaffen, bei welchem der Temperierkörper im Wesentlichen vollständig umkapselt ist und somit auch ohne der Gefahr von Leckagen nach außen von dem Wärmeträgerfluid der Wärmeträgerzirkulationen durchströmt werden kann.

Um das für die Erzeugung des magnetokalorischen Effekts erforderliche Magnetfeld in definierter Weise einstellen bzw. orientieren zu können, wird vorgeschlagen, dass die Magnetanordnung an einer ersten Radialseite oder/und einer ersten Axialseite bezüglich des Temperierkörperaufnahmeraums wenigstens einen ersten Magneten und an einer zweiten Radialseite oder/und einer zweiten Axialseite bezüglich des Temperierkörperaufnahmeraums wenigstens einen zweiten Magneten umfasst. Insbesondere kann bei derartigem Aufbau das Magnetfeld durch den Einsatz jeweils einer oder mehrerer Permanentmagnete generiert werden.

Zur Ausnutzung des bei dem erfindungsgemäßen Temperiergerät genutzten Wärmepumpeneffekts wird vorgeschlagen, dass eine von dem Wärmeabfuhrfluid durchströmbare Wärmetauscheranordnung zur Abgabe von Wärme von dem Wärmeabfuhrfluid vorgesehen ist, oder/und dass eine von dem Wärmeeintragfluid durchströmbare Wärmetauscheranordnung zur Aufnahme von Wärme in dem Wärmeeintragfluid vorgesehen ist.

Aufgrund der alternierenden Abfolge von Kühlbereichen und Magnetfeld-Erwärmungsbereichen kann ein mehrstufiger Wärmepumpenprozess bereitgestellt werden, wobei jeweils ein Kühlbereich und ein benachbarter Magnetfeld-Erwärmungsbereich zur Bereitstellung eines Kreisprozesses mit durch magnetische Wechselwirkung hervorgerufener adiabatischer Erwärmung und nachfolgender adiabatischer Abkühlung im jeweiligen Kühlbereich zusammenwirken können.

Die vorliegende Erfindung wird nachfolgend mit Bezug auf die beiliegenden Figuren detailliert beschrieben. Es zeigt:
- Fig. 1: eine geöffnet dargestellte perspektivische Ansicht eines den magnetokalorischen Effekt nutzenden Temperiergerätes;
- Fig. 2: eine axiale Ansicht des Temperiergerätes der Fig. 1;
- Fig. 3: eine prinzipartige Darstellung, welche den bei dem Temperiergerät der Fig. 1 in mehreren Prozessstufen ablaufenden Wärmepumpeneffekt veranschaulicht;

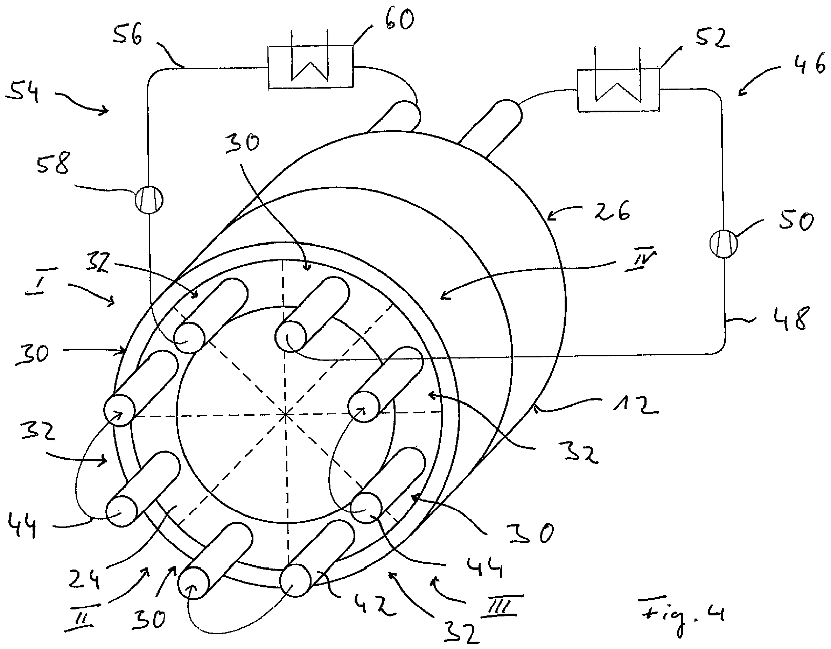

- Fig. 4: eine perspektivische Darstellung des Temperiergeräts, in welchem die verschiedenen Fluidströmungen veranschaulicht sind.

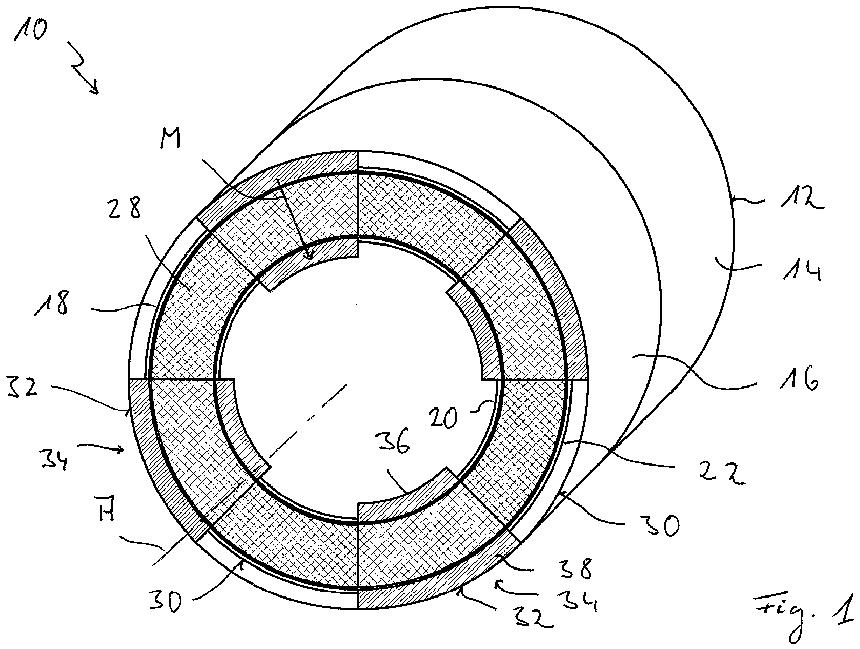

In den Figuren ist ein beispielsweise zur thermischen Konditionierung, insbesondere zum Kühlen, eines Fahrzeuginnenraums einsetzbares Temperiergerät allgemein mit 10 bezeichnet. Das in Fig. 1 in perspektivischer Ansicht dargestellte Temperiergerät 10 umfasst ein Temperierkörperaufnahmegehäuse 12, das beispielsweise aus zwei zueinander im Wesentlichen gleich aufgebauten, in Richtung einer Gehäuseachse A aufeinander folgend angeordneten Gehäuseschalen 14, 16 ausgebildet sein kann. Das Gehäuse 12 bzw. jede der Gehäuseschalen 14, 16 ist mit einer einen allgemein mit 18 bezeichneten, beispielsweise ringzylindrisch ausgebildeten Temperierkörperaufnahmeraum nach radial innen begrenzenden ersten Gehäuseumfangswandung 20 und nach radial außen begrenzenden zweiten Gehäuseumfangswandung 22 ausgebildet. An den beiden axialen Enden des Temperierkörperaufnahmegehäuses 12 kann der Temperierkörperaufnahmeraum 18 beispielsweise durch jeweilige die erste Gehäuseumfangswandung 20 und die zweite Gehäuseumfangswandung 22 verbindende, ringartige Gehäusestirnwandungen 24 bzw. 26 abgeschlossen sein.

In dem somit im Wesentlichen fluiddicht gekapselten Temperierkörperaufnahmeraum 18 ist ein in seiner Formgebung an die Formgebung des Temperierkörperaufnahmeraums 18 angepasster und somit beispielsweise ebenfalls im Wesentlichen ringzylindrisch ausgebildeter Temperierkörper 28 um die Gehäuseachse A drehbar aufgenommen. Der Temperierkörper 28 kann in dem im Wesentlichen feststehenden Temperierkörperaufnahmegehäuse 12 durch einen beispielsweise auch in dieses Gehäuse integrierten elektromotorischen Antrieb zur Drehung angetrieben werden. Dieser Antrieb kann beispielsweise in einem axialen Endbereich des Temperierkörperaufnahmegehäuses 12 eine Statoranordnung und in dem zugeordneten axialen Endbereich des Temperierkörpers 28 eine mit diesem um die Gehäuseachse A drehbare Rotoranordnung eines Elektromotors umfassen. Der Temperierkörper 28 ist mit magnetokalorischem Material aufgebaut. Derartiges magnetokalorisches Material zeichnet sich dadurch aus, dass aufgrund der bei Bewegung desselben in ein Magnetfeld hinein erfolgenden Ausrichtung der magnetischen Momente in dem Material eine Erwärmung desselben auftritt, während dann, wenn das magnetokalorische Material aus dem Magnetfeld heraus bewegt wird, eine Abkühlung erfolgt. Durch das alternierende Bewegen in ein Magnetfeld hinein und aus einem Magnetfeld heraus kann ein Kreisprozess erzeugt werden, bei welchem dem im Magnetfeld sich befindenden und erwärmten magnetokalorischem Material Wärme entzogen wird und dem außerhalb des Magnetfelds positionierten und somit auf niedrigerem Temperaturniveau sich befindenden magnetokalorischem Material Wärme zugeführt. Dieser Kreisprozess ermöglicht den Einsatz eines so aufgebauten Temperiergeräts 10 als Wärmepumpe.

Um aus dem Temperierkörper 28 Wärme abzuführen bzw. dem Temperierkörper 28 Wärme zuzuführen, wird dieser von einem Fluid, im Allgemeinen einer Flüssigkeit, umströmt bzw. durchströmt. Hierzu kann der Temperierkörper 28 mit poröser oder mit Durchströmöffnungen bzw. Kanälen ausgebildeter Struktur bereitgestellt werden, so dass ein, wie nachfolgend noch erläutert, den Temperierkörperaufnahmeraum 18 durchströmendes Fluid Wärme aus dem Temperierkörper 28 abführen oder in diesen eintragen kann.

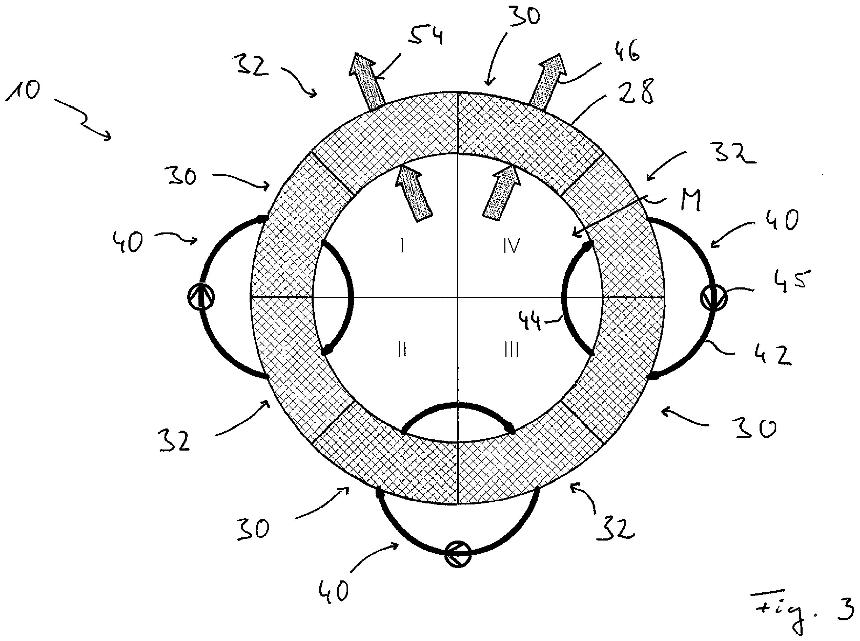

Die im Allgemeinen kreisringartige Struktur des Temperiergeräts 10 ist bei dem in den Figuren dargestellten Ausgestaltungsbeispiel so wie in Fig. 3 dargestellt in insgesamt vier Temperiersektoren I bis IV unterteilt. Jeder der Temperiersektoren I bis IV umfasst in Umfangsrichtung um die Gehäuseachse A aufeinander folgend bzw. nebeneinander angeordnet einen Kühlbereich 30 und einen Magnetfeld-Erwärmungsbereich 32. Es ergibt sich somit eine alternierende Umfangsabfolge von Kühlbereichen 30 und Magnetfeld-Erwärmungsbereichen 32 der vier Temperiersektoren I bis IV.

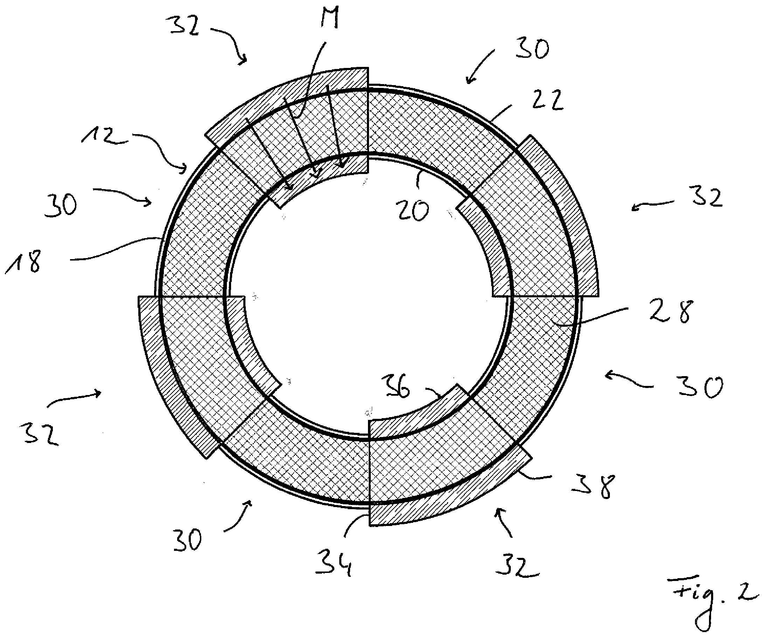

Wie in den Fig. 1 und 2 erkennbar, ist jedem der insgesamt vier Magnetfeld-Erwärmungsbereichen 32 eine allgemein mit 34 bezeichnete Magnetanordnung zugeordnet. Jede dieser Magnetanordnungen 34 kann beispielsweise mit einem oder mehreren im Bereich der ersten Gehäuseumfangswandung 20 jeweils angeordneten Magneten 36, insbesondere Permanentmagneten, sowie einem oder mehreren im Bereich der zweiten Gehäuseumfangswandung 22, also radial außerhalb des Temperierkörpers 28 angeordneten Magneten 38, insbesondere Permanentmagneten, ausgebildet sein. Somit kann in Zuordnung zu jedem der Magnetfeld-Erwärmungsbereiche 32 ein dieses im dargestellten Beispiel im Wesentlichen radial durchsetzendes Magnetfeld M bereitgestellt werden.

Bei in Umfangsrichtung benachbarten Temperiersektoren ist zwischen dem Kühlbereich 30 eines dieser Temperiersektoren und dem Magnetfeld-Erwärmungsbereich 32 des anderen dieser Temperiersektoren jeweils eine allgemein mit 40 bezeichnete Wärmeträgermediumzirkulation bereitgestellt. Diese umfasst eine von einem jeweiligen Magnetfeld-Erwärmungsbereich zu einem benachbarten Kühlbereich führende erste Zirkulationsleitung 42 und eine von diesem Kühlbereich 30 zu dem Magnetfeld-Erwärmungsbereich 32 führende zweite Zirkulationsleitung 44. In einer der Zirkulationsleitungen, beispielsweise der ersten Zirkulationsleitung 42, kann eine Zirkulationspumpe 45 vorgesehen sein, welche zum Aufrechterhalten der Zirkulation des Wärmeträgermediums betrieben werden kann. Wie die Fig. 3 dies zeigt, sind bei der Aufgliederung in insgesamt vier Temperiersektoren I bis IV insgesamt drei derartige Wärmeträgermediumzirkulationen 40 in Umfangsrichtung aufeinander folgend vorgesehen. Dabei kann der konstruktive Aufbau derart sein, dass das in einer jeweiligen Wärmeträgermediumzirkulation zirkulierende Wärmeträgermedium den Temperierkörper 28 im Wesentlichen in Richtung der Gehäuseachse A durchströmt, also im Wesentlichen einer Richtung, orthogonal zur Richtung des in den Magnetfeld-Erwärmungsbereichen 32 bereitgestellten Magnetfeldes M. Hierzu können beispielsweise die ersten und zweiten Zirkulationsleitungen 42, 44 jeweils im Bereich der ersten Gehäusestirnwandung 24 bzw. der zweiten Gehäusestirnwandung 26 in den Temperierkörperaufnahmeraum 18 einmünden. Es ist darauf hinzuweisen, dass im Temperierkörperaufnahmeraum 18 in Umfangsrichtung keine Trennung der verschiedenen Fluidzirkulationen 40 voneinander erfolgt. Diese sind im Wesentlichen dadurch bereitgestellt bzw. aufgebaut, dass im Verlaufe der Rotation des Temperierkörpers 28 im Temperierkörperaufnahmeraum 18 Fluid in einem bestimmten Umfangsbereich jeweils in den Temperierkörperaufnahmeraum 18 und somit auch den Temperierkörper 28 eintritt und am anderen axialen Endbereich auch Fluid im gleichen Umfangsbereich aus dem Temperierkörper 28 bzw. dem Temperierkörperaufnahmeraum 18 austritt.

In Zuordnung zum Kühlbereich 30 des Temperiersektors IV ist eine allgemein mit 46 bezeichnete Zirkulation eines Wärmeeintragfluids vorgesehen. Diese Zirkulation 46 umfasst eine Zirkulationsleitung 48, die im Bereich des Kühlbereichs 30 des Temperiersektors IV an den Gehäusestirnseiten 24 bzw. 26 in den Temperierkörperaufnahmeraum 18 einmündet, so dass in diesem Umfangsbereich Wärmeeintragfluid in den Temperierkörperaufnahmeraum 18 und somit den Temperierkörper 28 eingeleitet und daraus auch abgezogen werden kann. Um das Wärmeeintragfluid zur Zirkulation anzutreiben, ist in der Zirkulationsleitung 48 eine Zirkulationspumpe 50 vorgesehen. Ferner ist eine Wärmetauscheranordnung 52 vorgesehen, in welcher das in der Zirkulationsleitung 48 strömende Wärmeeintragfluid Wärme aufnehmen kann. Beispielsweise kann eine thermische Wechselwirkung erfolgen zwischen der in einen Fahrzeuginnenraum einzuleitenden Luft und dem in der Zirkulationsleitung 48 zirkulierenden Wärmeeintragfluid.

In Zuordnung zu dem dem Kühlbereich 30 des Temperiersektors IV unmittelbar benachbarten Magnetfeld-Erwärmungsbereich 32 des Temperiersektors I ist eine Zirkulation 54 von Wärmeabfuhrfluid vorgesehen. Diese Zirkulation 54 umfasst eine Zirkulationsleitung 56, welche im Bereich des Magnetfeld-Erwärmungsbereichs 32 des Temperiersektors I an den beiden Gehäusestirnseiten 24, 26 in den Temperierkörperaufnahmeraum 18 einmündet, so dass in diesem Umfangsbereich eine den Temperierkörper 28 durchsetzende oder/und umströmende Strömung von Wärmeabfuhrfluid erzeugt werden kann. Um das Wärmeabfuhrfluid zur Zirkulation anzutreiben, ist eine Zirkulationspumpe 58 in der Zirkulationsleitung 56 vorgesehen. Ferner ist in der Zirkulationsleitung 56 eine Wärmetauscheranordnung 60 vorgesehen. In dieser Wärmetauscheranordnung 60 kann das in der Zirkulationsleitung 56 strömende Wärmeabfuhrfluid Wärme auf ein weiteres Medium, beispielsweise die Umgebungsluft außerhalb eines Fahrzeuginnenraums, übertragen.

Aufgrund der vorangehend angesprochenen nicht vorhandenen strömungstechnischen Trennung der Wärmeträgermediumzirkulationen 40 voneinander bzw. auch bezüglich der Zirkulation 46 des Wärmeeintragfluids bzw. der Zirkulation 54 des Wärmeabfuhrfluids wird für das in den verschiedenen Wärmeträgermedium-Zirkulationen 40 zirkulierende Wärmeträgermedium das gleiche Fluid, insbesondere die gleiche Flüssigkeit verwendet, wie für die Zirkulation 46 bzw. die Zirkulation 54. Insbesondere kann hier bei einer besonders vorteilhaften Ausgestaltung auf Wasser als Fluid zurückgegriffen werden.

Nachfolgend wird der Betrieb des Temperiergeräts 10 zum Kühlen der im Bereich der Wärmetauscheranordnung 52 mit dem in der Zirkulation 46 zirkulierenden Fluid in thermischen Wechselwirkung gebrachten Luft, welche in einen Fahrzeuginnenraum eingespeist werden soll, beschrieben. Es sei hierfür zunächst angenommen, dass bei Inbetriebnahme des Temperiergeräts 10 alle Systembereiche und auch das in verschiedenen Bereichen zirkulierende Fluid auf der gleichen Temperatur sind und dass der ringartig ausgestaltete Temperierkörper im Temperierkörperaufnahmeraum im Gegenuhrzeigersinn rotiert.

Betrachtet man zunächst denjenigen Umfangsbereich des Temperierkörpers 28 welcher in diesem Anfangszustand im Kühlbereich 30 des Temperiersektors IV positioniert ist, so wird dieser Umfangsbereich am Beginn der Rotation des Temperierkörpers 28 sich entgegen dem Uhrzeigersinn in den Magnetfeld-Erwärmungsbereich 32 des Temperiersektors I bewegen. Aufgrund des vorangehend bereits erläuterten physikalischen Effekts der Spinausrichtung in dem im Magnetfeld-Erwärmungsbereich 32 vorhandenen Magnetfeld M erwärmt sich der in diesen Magnetfeld-Erwärmungsbereich 32 eintretende Bereich des Temperierkörpers 28. Er wird daher eine Temperatur aufweisen, die über der auf Umgebungstemperaturniveau liegenden Temperatur des in der Zirkulation 54 strömenden Wärmeabfuhrfluids liegt. Dies bedeutet, dass das Wärmeabfuhrfluid Wärme vom Temperierkörper 28 aufnimmt und diese im Bereich der Wärmetauscheranordnung 60 auf die beispielsweise ebenfalls auf dem Anfangstemperaturniveau sich befindende Umgebungsluft überträgt.

In entsprechender Weise bewegt sich am Beginn des Prozesses ein zuvor im Magnetfeld-Erwärmungsbereich 32 des Temperiersektors IV positionierter Bereich des ringartigen Temperierkörpers 28 in den Kühlbereich 30 des Temperiersektors IV. Da dabei dieser Bereich des Temperierkörpers 28 aus dem im Magnetfeld-Erwärmungsbereich 32 des Temperiersektors IV vorhandenen Magnetfeld M herausbewegt wird, geht die Spinausrichtung verloren und der Temperierkörper 28 kühlt sich lokal ab. Dies bedeutet, dass auch das in der Zirkulation 46 strömende Wärmeeintragfluid abgekühlt wird bzw. Wärme auf den Temperierkörper 28 überträgt. Das im Vergleich zur zunächst vorhandenen Umgebungstemperatur den Temperierkörperaufnahmeraum 18 verlassende Wärmeeintragfluid durchströmt die Wärmetauscheranordnung 52 und nimmt dabei von der auf höherem Temperaturniveau, zunächst also auf Umgebungstemperaturniveau, befindlichen und in einen Fahrzeuginnenraum einzuleitenden Luft Wärme auf. Diese Luft wird somit gekühlt und kann gekühlt in den Fahrzeuginnenraum eingeleitet werden.

Im Bereich jeder der in Umfangsrichtung aufeinander folgenden Zirkulationen 40 findet zwischen dem Magnetfeld-Erwärmungsbereich 32 des Temperiersektors I und dem Kühlbereich 30 des Temperiersektors IV ein entsprechender Prozess statt. Jeder in einen Magnetfeld-Erwärmungsbereich 32 eintretende Umfangsbereich des Temperierkörpers 28 wird erwärmt und jeder in einen Kühlbereich 30 eintretende Umfangsbereich des Temperierkörpers 28 wird abgekühlt. Um dabei den vorangehend angesprochenen Kreisprozess mit Übertragung von Wärme vermittels eines Wärmeträgermediums zu generieren, sind die Zirkulationen 40 vorgesehen, so dass derartige Kreisprozesse mehrstufig hintereinander geschaltet sind und in jedem der in Umfangsrichtung aufeinander folgenden Kreisprozesse eine Temperaturänderung, insbesondere Temperaturabnahme des Temperierkörpers 28 bei seiner Bewegung im Gegenuhrzeigersinn hervorgerufen werden kann. Die in den aufeinander folgenden Kreisprozessen generierten Temperaturänderungen addieren bzw. überlagern sich zu einer Gesamttemperaturänderung. Dies bedeutet, dass aufgrund dieser nacheinander geschalteten Kreisprozesse Wärme vom Wärmeeintragfluid in der Zirkulation 46 auf das Wärmeabfuhrfluid in der Zirkulation 54 übertragen wird, was letztendlich bedeutet, dass Wärme von der in den Fahrzeuginnenraum einzuleitenden Luft auf die außerhalb des Fahrzeugs sich befindende Umgebungsluft übertragen wird.

Aufgrund der Rotation des Temperierkörpers 28 im Temperierkörperaufnahmeraum 18 findet ein alternierender Erwärmungs- bzw. Abkühlprozess des Temperierkörpers 28 in den aufeinander folgenden Temperiersektoren I bis IV statt. Um bei der Rotation des Temperierkörpers 28 eine ausreichende thermische Wechselwirkung des die jeweiligen Temperiersektoren I bis IV durchströmenden Wärmeträgermediums mit dem darin vorhandenen magnetokalorischen Material des Temperierkörpers 28 zu ermöglichen, kann der Rotationsbetrieb des Temperierkörpers 28 intermittierend bzw. mit variabler Rotationsgeschwindigkeit erfolgen. Somit kann gewährleistet werden, dass immer dann, wenn ein beispielsweise in seiner Umfangserstreckung der Umfangserstreckung eines Magnetfeld-Erwärmungsbereichs bzw. eines Kühlbereichs entsprechender Abschnitt des Temperierkörpers 28 sich in einen in Umfangsrichtung folgenden Kühlbereich bzw. Magnetfeld-Erwärmungsbereich bewegt hat, durch vorübergehendes Absenken der Drehgeschwindigkeit des Temperierkörpers 28 oder durch vorübergehendes Anhalten des Temperierkörpers 28 das Wärmeträgermedium aus dem in einem derartigen Zustand in einem Magnetfeld-Erwärmungsbereich positionierten Teil des Temperierkörpers 28 Wärme abtragen kann bzw. in entsprechender Weise in den Kühlbereichen Wärme in den Temperierkörper 28 eintragen kann. Zwischen derartigen Wärmeaustauschphasen mit geringerer Drehgeschwindigkeit bzw. nicht rotierendem Temperierkörper 28 bewegt sich der Temperierkörper in Bewegungsphasen weiter, bis eine beispielsweise zuvor im Wesentlichen im Bereich eines Magnetfeld-Erwärmungsbereich positionierter Teil des Temperierkörpers 28 in einem in Umfangsrichtung dann folgenden Kühlbereich positioniert ist. Die Dauer der Phasen, während welchen der Temperierkörper nicht bzw. mit geringerer Geschwindigkeit rotiert, kann so gewählt werden, dass der erforderliche Wärmeübertrag zwischen dem Temperierkörper und dem Wärmeträgermedium erfolgt.

Dabei kann selbstverständlich durch entsprechend andere Teilung auch die Hintereinanderschaltung von mehr oder weniger als vier derartigen Temperiersektoren und im Zusammenhang damit generierten Wärmeträgermediumzirkulationen bereitgestellt werden. Auch müssen nicht notwendigerweise die in Umfangsrichtung aufeinander folgenden Kühlbereiche und Magnetfeld-Erwärmungsbereiche jeweils mit zueinander gleicher Umfangserstreckung ausgebildet sein. Ferner kann das Temperiergerät selbstverständlich auch zum Erwärmen der beispielsweise in einen Fahrzeuginnenraum einzuleitenden Luft genutzt werden. In diesem Falle wird die im Bereich der Wärmetauscheranordnung 60 in thermische Wechselwirkung mit dem Wärmeabfuhrfluid tretende Luft in den Fahrzeuginnenraum geleitet bzw. dem Fahrzeuginnenraum entnommen, und nicht die im Bereich der Wärmetauscheranordnung 52 in thermische Wechselwirkung mit dem Wärmeeintragfluid kommende Luft. Da die vorangehend beschriebenen mehrstufig aufeinander folgenden Kreisprozesse jedoch bei höherem Temperaturniveau des Wärmeträgermediums bzw. des Wärmeabfuhrfluids bzw. des Wärmeeintragfluids effizienter ablaufen, ist das erfindungsgemäße Temperiergerät besonders zum Kühlen, also zum Einsatz als Fahrzeugklimatisiergerät, bei höheren Umgebungstemperaturen geeignet.

Die in den Figuren dargestellte Positionierung der Magnetanordnungen 34 und die dadurch hervorgerufene, im Wesentlichen radiale Orientierung des Magnetfelds bei entsprechender axialer Durchströmung des Temperierkörperaufnahmeraums 18 ist insbesondere zum Bereitstellen vergleichsweise großer Magnetfeldstärken besonders vorteilhaft, da durch die radial einander gegenüberliegenden Magnete 34, 36 aufgrund deren Positionierung vergleichsweise nahe beieinander eine große Feldstärke erzeugt werden kann. Gleichwohl ist es durchaus möglich, Magnete alternativ oder zusätzlich im Bereich der Gehäusestirnseiten 24, 26 anzuordnen, so dass grundsätzlich durch die Magnetanordnungen 34 jeweils ein im Wesentlichen axial orientiertes Magnetfeld generiert wird. Gleichermaßen könnten im Bereich der verschiedenen Kühlbereiche bzw. Magnetfeld-Erwärmungsbereiche die dort jeweils anschließenden Zirkulationsleitungen das zirkulierende Fluid radial zuführen bzw. abführen.

## Patentansprüche

1. Temperiergerät, insbesondere Fahrzeugtemperiergerät, umfassend:
- einen von Wärmeträgermedium durchströmbaren oder/und umströmbaren, mit magnetokalorischem Material aufgebauten Temperierkörper (28),
- ein den Temperierkörper (28) um eine Drehachse (A) drehbar aufnehmendes Temperierkörperaufnahmegehäuse (12) mit einem Temperierkörperaufnahmeraum (18),
- wenigstens einen Temperiersektor (I, II, III, IV) mit einem Kühlbereich (30) und einem in Umfangsrichtung neben dem Kühlbereich (30) angeordneten Magnetfeld-Erwärmungsbereich (32), wobei in Zuordnung zu jedem Magnetfeld-Erwärmungsbereich (32) eine Magnetanordnung (34) zur Erzeugung eines den Magnetfeld-Erwärmungsbereich (32) durchsetzenden Magnetfeldes (M) vorgesehen ist,
wobei bei wenigstens einem Temperiersektor (I, II, III, IV) der Kühlbereich (30) von einem Wärmeeintragfluid zum Eintragen von Wärme in diesem Temperiersektor (I, II, III, IV) durchströmbar ist oder/und wobei bei wenigstens einem Temperiersektor (I, II, III, IV) der Magnetfeld-Erwärmungsbereich (32) von einem Wärmeabfuhrfluid zur Abfuhr von Wärme aus diesem Temperiersektor (I, II, III, IV) durchströmbar ist,
**dadurch gekennzeichnet,**
- **dass** eine Mehrzahl von in Umfangsrichtung aufeinanderfolgenden Temperiersektoren (I, II, III, IV) jeweils mit einem Kühlbereich (30) und einem in Umfangsrichtung neben dem Kühlbereich (30) angeordneten Magnetfeld-Erwärmungsbereich (32) derart vorgesehen ist, dass sich eine alternierende Umfangsabfolge von Kühlbereichen (30) und Magnetfeld-Erwärmungsbereichen (32) ergibt,
und
- **dass** bei wenigstens zwei benachbarten Temperiersektoren (I, II, III, IV) eine Wärmeträgermediumzirkulation (40) von dem Magnetfeld-Erwärmungsbereich (32) von einem dieser Temperiersektoren (I, II, III, IV) zu dem Kühlbereich (30) des anderen dieser Temperiersektoren (I, II, III, IV) und von dem Kühlbereich (30) des anderen dieser Temperiersektoren (I, II, III, IV) zu dem Magnetfeld-Erwärmungsbereich (32) des einen dieser Temperiersektoren (I, II, III, IV) vorgesehen ist.

2. Temperiergerät nach Anspruch 1, **dadurch gekennzeichnet, dass** bei wenigstens einem Temperiersektor (I, II, III, IV) die Magnetanordnung (34) zur Erzeugung eines im Wesentlichen radial orientierten Magnetfeldes (M) angeordnet ist oder/und dass die Wärmeträgermediumzirkulation (40) zur Erzeugung einer den Magnetfeld-Erwärmungsbereich (32) und den Kühlbereich (30) im Wesentlichen axial durchströmenden Wärmeträgermediumströmung ausgebildet ist.

3. Temperiergerät nach Anspruch 1 oder 2, **dadurch gekennzeichnet, dass** bei wenigstens einem Temperiersektor (I, II, III, IV) die Magnetanordnung (34) zur Erzeugung eines im Wesentlichen axial orientierten Magnetfeldes angeordnet ist oder/und dass die Wärmeträgermediumzirkulation (40) zur Erzeugung einer den Magnetfeld-Erwärmungsbereich (32) und den Kühlbereich (30) im Wesentlichen radial durchströmenden Wärmeträgermediumströmung ausgebildet ist.

4. Temperiergerät nach einem der Ansprüche 1-3, **dadurch gekennzeichnet, dass** zur Bereitstellung einer Wärmeträgermediumzirkulation (40) bei wenigstens zwei benachbarten Temperiersektoren (I, II, III, IV) wenigstens eine von dem Magnetfeld-Erwärmungsbereich (32) zu dem Kühlbereich (30) führende erste Zirkulationsleitung (42), wenigstens eine von dem Kühlbereich (30) zu dem Magnetfeld-Erwärmungsbereich (32) führende zweite Zirkulationsleitung (44) und eine Zirkulationspumpe (45) vorgesehen sind.

5. Temperiergerät nach einem der Ansprüche 1-4, **dadurch gekennzeichnet, dass** das Temperierkörperaufnahmegehäuse (12) eine den Temperierkörperaufnahmeraum (18) an einer ersten Radialseite in einer ersten Radialrichtung, vorzugsweise nach radial innen, begrenzende erste Gehäuseumfangswandung (20) und eine den Temperierkörperaufnahmeraum (18) an einer zweiten Radialseite in einer zweiten Radialrichtung, vorzugsweise nach radial außen, begrenzende zweite Gehäuseumfangswandung (22) umfasst.

6. Temperiergerät nach Anspruch 5, **dadurch gekennzeichnet, dass** das Temperierkörperaufnahmegehäuse (12) eine den Temperierkörperaufnahmeraum (18) an einer ersten Axialseite in einer ersten Axialrichtung begrenzende erste Gehäusestirnwandung (24) und eine den Temperierkörperaufnahmeraum (18) an einer zweiten Axialseite in einer der ersten Axialrichtung entgegengesetzten zweiten Axialrichtung begrenzende zweite Gehäusestirnwandung (26) umfasst.

7. Temperiergerät einem der Ansprüche 1-6, **dadurch gekennzeichnet, dass** die Magnetanordnung (34) an einer ersten Radialseite oder/und einer ersten Axialseite bezüglich des Temperierkörperaufnahmeraums (18) wenigstens einen ersten Magneten (36) und an einer zweiten Radialseite oder/und einer zweiten Axialseite bezüglich des Temperierkörperaufnahmeraums (18) wenigstens einen zweiten Magneten (38) umfasst.

8. Temperiergerät nach einem der Ansprüche 1-7, **dadurch gekennzeichnet, dass** eine von dem Wärmeabfuhrfluid durchströmbare Wärmetauscheranordnung (60) zur Abgabe von Wärme von dem Wärmeabfuhrfluid vorgesehen ist, oder/und dass eine von dem Wärmeeintragfluid durchströmbare Wärmetauscheranordnung (52) zur Aufnahme von Wärme in dem Wärmeeintragfluid vorgesehen ist.

9. Temperiergerät nach einem der Ansprüche 1-8, **dadurch gekennzeichnet, dass** der Temperierkörper (28) ringartig ist.

## Claims

1. Temperature control unit, especially temperature control unit for a vehicle, comprising:
- a temperature control body (28) formed of magnetocaloric material and through which or/and around which heat transfer medium can flow;
- a temperature control body receiving housing (12) with a temperature control body receiving space (18) receiving the temperature control body (28) for rotation about an axis of rotation (A);
- at least one temperature control sector (I, II, III, IV) with a cooling area (30) and a magnetic field heating area (32) arranged in the circumferential direction next to the cooling area (30), wherein in association to each magnetic field heating area (32) a magnet array is provided for generating a magnetic field (M) penetrating the magnetic field heating area (32),
wherein in at least one temperature control sector (I, II, III, IV) a heat input fluid for feeding heat into said temperature control sector (I, II, III, IV) can flow through the cooling area (30) or/and wherein a heat discharge fluid can flow through the magnetic field heating area (32) in at least one temperature control sector (I, II, III, IV) for discharging heat from said temperature control sector (I, II, III, IV),
**characterized in that**
- a plurality of temperature control sectors (I, II, III, IV) following each other in a circumferential direction, each of the control sectors comprising a cooling area (30) and a magnetic field heating area (32) arranged in the circumferential direction next to the cooling area (30) are provided such that there is an alternating circumferential arrangement of cooling areas (30) and magnetic field heating areas (32),
and
- that in at least two adjacent temperature control sectors (I, II, III, IV) a heat transfer medium circulation (40) is provided from the magnetic field heating area (32) of one of said temperature control sectors (I, II, III, IV) to the cooling area (30) of the other of said temperature control sectors (I, II, III, IV) and from the cooling area (30) of the other one of said temperature control sectors (I, II, III, IV) to the magnetic field heating area (32) of the one of said temperature control sectors (I, II, III, IV).

2. Temperature control unit in accordance with claim 1, **characterized in that** in at least one temperature control sector (I, II, III, IV) the magnet array (34) is arranged for generating an essentially radially oriented magnetic field (M) or/and that the heat transfer medium circulation (40) is configured for generating a heat transfer medium flow flowing essentially axially through the magnetic field heating area (32) and the cooling area (30).

3. Temperature control unit in accordance with claim 1 or 2, **characterized in that** in at least one temperature control sector (I, II, III, IV) the magnet array (34) is arranged for generating an essentially axially oriented magnetic field or/and that the heat transfer medium circulation (40) is configured for generating a heat transfer medium flow flowing essentially radially through the magnetic field heating area (32) and the cooling area (30).

4. Temperature control unit in accordance with one of claims 1-3, **characterized in that** for generating a heat transfer medium flow (40) in at least two adjacent temperature control sectors (I, II, III, IV) at least one first circulation line (42) is provided leading from the magnetic field heating area (32) to the cooling area (30) and at least one second circulation line (44) is provided leading from the cooling area (30) to the magnetic field heating area (32) and a circulating pump (45) is provided.

5. A temperature control unit in accordance with one of claims 1-4, **characterized in that** the temperature control body receiving housing (12) comprises a first housing circumferential wall (20) defining the temperature control body receiving space (18) on a first radial side in a first radial direction, preferably radially inwards, and a second housing circumferential wall (22) defining the temperature control body receiving space (18) on a second radial side in a second radial direction, preferably radially outwards.

6. Temperature control unit in accordance with claim 5, **characterized in that** the temperature control body receiving housing (12) comprises a first housing front wall (24) defining the temperature control body receiving space (18) on a first axial side in a first axial direction and a second housing front wall (26) defining the temperature control body receiving space (18) on a second axial side in a second axial direction opposed to the first axial direction.

7. Temperature control unit in accordance with one of claims 1-6, **characterized in that** the magnet array (34) comprises at least one first magnet (36) on a first radial side or/and on a first axial side in relation to the temperature control body receiving space (18) and at least one second magnet (38) on a second radial side or/and on a second axial side in relation to the temperature control body receiving space (18).

8. Temperature control unit in accordance with one of claims 1-7, **characterized in that** a heat exchanger arrangement (60) through which heat discharge fluid is able to flow is provided for discharging heat from the heat discharge fluid or/and that a heat exchanger arrangement (52) is provided through which heat input fluid is able to flow for absorbing heat in the heat input fluid.

9. Temperature control unit in accordance with one of claims 1-8, **characterized in that** the temperature control body (28) is ring-shaped.

## Revendications

1. Unité de régulation de la température, notamment unité de régulation de la température pour un véhicule, comprenant :
- un corps de régulation de la température (28) formé d'un matériau magnétocalorique et à travers lequel ou/et autour duquel un milieu de transfert de chaleur peut circuler ;
- un boîtier de réception du corps de régulation de la température (12) avec un espace de réception du corps de régulation de la température (18) recevant le corps de régulation de la température (28) pour une rotation autour d'un axe de rotation (A);
- au moins un secteur de régulation de la température (I, II, III, IV) avec une zone de refroidissement (30) et une zone de chauffage de champ magnétique (32) disposée dans la direction circonférentielle à côté de la zone de refroidissement (30), dans lequel en association avec chaque zone de chauffage de champ magnétique (32), un réseau d'aimants est prévu pour générer un champ magnétique (M) pénétrant dans la zone de chauffage de champ magnétique (32),
dans lequel, dans au moins un secteur de régulation de la température (I, II, III, IV), un fluide d'apport de chaleur pour alimenter en chaleur ledit secteur de régulation de la température (I, II, III, IV) peut s'écouler à travers la zone de refroidissement (30) ou/et dans lequel un fluide d'évacuation de chaleur peut s'écouler à travers la zone de chauffage de champ magnétique (32) dans au moins un secteur de régulation de la température (I, II, III, IV) pour évacuer la chaleur dudit secteur de régulation de la température (I, II, III, IV),
**caractérisé en ce que**
- une pluralité de secteurs de régulation de la température (I, II, III, IV) se suivant les uns les autres dans une direction circonférentielle, chacun des secteurs de régulation comprenant une zone de refroidissement (30) et une zone de chauffage de champ magnétique (32) disposée dans la direction circonférentielle à côté de la zone de refroidissement (30) sont prévus de telle sorte qu'il y a un agencement circonférentiel alterné de zones de refroidissement (30) et de zones de chauffage de champ magnétique (32),
et
- que dans au moins deux secteurs de régulation de la température adjacents (I, II, III, IV), une circulation de médium caloporteur (40) est prévue depuis la zone de chauffage de champ magnétique (32) de l'un desdits secteurs de régulation de la température (I, II, III, IV) vers la zone de refroidissement (30) de l'autre desdits secteurs de régulation de la température (I, II, III, IV) et depuis la zone de refroidissement (30) de l'autre desdits secteurs de régulation de la température (I, II, III, IV) vers la zone de chauffage de champ magnétique (32) de l'un desdits secteurs de régulation de la température (I, II, III, IV).

2. Unité de régulation de la température selon la revendication 1, **caractérisée en ce que** dans au moins un secteur de régulation de la température (I, II, III, IV), l'agencement d'aimants est agencé pour générer un champ magnétique orienté essentiellement radialement (M) ou/et **en ce que** la circulation de médium caloporteur (40) est configurée pour générer un flux de médium caloporteur s'écoulant essentiellement axialement à travers la zone de chauffage de champ magnétique (32) et la zone de refroidissement (30).

3. Unité de régulation de la température selon la revendication 1 ou 2, **caractérisée en ce que** dans au moins un secteur de régulation de la température (I, II, III, IV), l'agencement d'aimants (34) est agencé pour générer un champ magnétique orienté essentiellement axialement ou/et **en ce que** la circulation de médium caloporteur (40) est configurée pour générer un flux de médium caloporteur s'écoulant essentiellement radialement à travers la zone de chauffage de champ magnétique (32) et la zone de refroidissement (30).

4. Unité de régulation de la température selon l'une des revendications 1 à 3, **caractérisée en ce que** pour générer une circulation de médium caloporteur (40) dans au moins deux secteurs de régulation de la température adjacents (I, II, III, IV), il est prévu au moins une première conduite de circulation (42) menant de la zone de chauffage de champ magnétique (32) à la zone de refroidissement (30) et au moins une deuxième conduite de circulation (44) menant de la zone de refroidissement (30) à la zone de chauffage de champ magnétique (32) et une pompe de circulation (45).

5. Unité de régulation de la température selon l'une des revendications 1 à 4, **caractérisée en ce que** le boîtier de réception du corps de régulation de la température (12) comprend une première paroi circonférentielle de boîtier (20) définissant l'espace de réception du corps de régulation de la température (18) sur un premier côté radial dans une première direction radiale, de préférence radialement vers l'intérieur, et une deuxième paroi circonférentielle de boîtier (22) définissant l'espace de réception du corps de régulation de la température (18) sur un deuxième côté radial dans une deuxième direction radiale, de préférence radialement vers l'extérieur.

6. Unité de régulation de la température selon la revendication 5, **caractérisée en ce que** le boîtier de réception du corps de régulation de la température (12) comprend une première paroi avant de boîtier (24) définissant l'espace de réception du corps de régulation de la température (18) sur un premier côté axial dans une première direction axiale et une seconde paroi avant de boîtier (26) définissant l'espace de réception du corps de régulation de la température (18) sur un deuxième côté axial dans une deuxième direction axiale opposée à la première direction axiale.

7. Unité de régulation de la température selon l'une des revendications 1 à 6, **caractérisée en ce que** l'agencement d'aimants (34) comprend au moins un premier aimant (36) sur un premier côté radial ou/et sur un premier côté axial par rapport à l'espace de réception du corps de régulation de la température (18) et au moins un deuxième aimant (38) sur un deuxième côté radial ou/et sur un deuxième côté axial par rapport à l'espace de réception du corps de régulation de la température (18).

8. Unité de régulation de la température selon l'une des revendications 1 à 7, **caractérisée en ce qu'**un agencement d'échangeur de chaleur (60) à travers lequel le fluide de décharge de chaleur peut s'écouler est prévu pour décharger la chaleur du fluide de décharge de chaleur ou/et **en ce qu'**un agencement d'échangeur de chaleur (52) est prévu à travers lequel le fluide d'entrée de chaleur peut s'écouler pour absorber la chaleur dans le fluide d'entrée de chaleur.

9. Unité de régulation de la température selon l'une des revendications 1 à 8, **caractérisée en ce que** le corps de régulation de la température (28) est de forme annulaire.
